# EUROPÄISCHE PATENTSCHRIFT

(11) **EP 0 307 546 B1**
(45) Veröffentlichungstag und Bekanntmachung des Hinweises auf die Patenterteilung: **20.01.1993**
(21) Anmeldenummer: 88109100.3
(22) Anmeldetag: 08.06.1988
(51) Int. Cl.: C09J 7/02, C08J 5/12

(54) **Kunststoffolie mit Haftvermittlerbeschichtung**
Plastic sheet with a primer coat
Feuille de matière plastique revêtue d'un agent d'accrochage

(30) Priorität: 21.08.1987 DE 3727924
(43) Veröffentlichungstag der Anmeldung: 22.03.1989
(73) Patentinhaber: J. H. Benecke AG, D-30419 Hannover (DE)
(72) Erfinder: Kupillas, Max, Dipl.-Ing., D-3004 Isernhagen 4 (DE)
(74) Vertreter: König, Norbert, Dipl.-Phys. Dr.

(56) Entgegenhaltungen:
- BE-A- 641 157
- DE-A- 1 569 900
- DE-A- 1 594 143
- DE-A- 3 220 886
- DE-B- 1 026 023

## Beschreibung

Die Erfindung betrifft eine Kunststoffolie gemäß Oberbegriff des Anspruchs 1.

Zur Herstellung bestimmter Oberflächen auf Möbeln, Geräten, Gehäusen und dergleichen werden die für solche Gegenstände eingesetzten Werkstoffe, wie Spanplatten, Hartfaserplatten, Bleche usw. mit fertigem Folienmaterial kaschiert unter Verwendung eines Klebers. Es ist bekannt, zur Verbesserung der Haftfestigkeit von Kunststoffolien dieser vorher mit einer dünnen Schicht aus einem sogenannten Haftvermittler zu versehen. Bei porösen Werkstoffen, wie Spanplatten, Hartfaserplatten u. ä. ist die Verwendung eines solchen Haftvermittlers normalerweise nicht notwendig. Um aber eine einwandfreie Haftung der Kunststoffolie auf dem Werkstoff, insbesondere auch an Krümmungen, zu gewährleisten, ist es bekannt, auch für die Kaschierung von porösen Werkstoffen die Folie mit einer Haftvermittlerbeschichtung zu versehen. Als Haftvermittler hat man in der Vergangenheit meist Lösungsmittelklebstoffe eingesetzt, weil man der Ansicht war, daß nur diese hierfür geeignet seien. Aufgrund verschärfter Bestimmungen, die in der TA-Luft 86 ihren Niederschlag gefunden haben, ist die Verwendung von Lösungsmittel-Klebstoffen strengen Bedingungen unterworfen.

Durch die DE-A 3 220 886 ist ein Klebeband, und zwar ein sogenanntes Selbstklebeband unter Verwendung einer Folie aus Weich-PVC bekannt. Zur Verbesserung der Haftung zwischen dem Kleber und der Weich-PVC-Folie ist zwischen dem Kleber und der Folie ein Haftvermittler - auch Primer genannt - vorgesehen, der ein Polyester sein soll oder eine Abmischung aus einer Polyesterdispersion mit einer anderen wäßrigen Polymerdispersion, wie Styrol-Butadien-, Akrylnitril-Butadien-, Akrylsäureester-, Chloropren-, Polyurethan-, Vinylchlorid- oder Vinylazetatdispersionen.

Die DE-A-1 594 143 betrifft einen druckempfindlichen Klebestreifen, also ebenfalls ene bereits mit einem Kleber versehene Folie, deren Klebewirkung durch Druckeinwirkung erzielt wird. Wegen der angestrebten Druckempfindlichkeit muß der Haftvermittler offen klebrig sein. Als Basisfolie wird eine Weich-PVC-Folie eingesetzt. Der Haftvermittler zwischen dem Kleber und der Weich-PVC-Folie besteht aus einem wasserunlöslichen kautschukartigen Nitrilpolymerisat.

Die DE-A-1 569 900 betrifft wiederum eine Selbstklebefolie mit einer Haftvermittlerschicht zwischen einer Weich-PVC-Folie und einer druckempfindlichen Selbstklebeschicht. Als Haftvermittler werden Abmischungen aus Ethylen-Vinylazetat-Kopolymeren und einem Elastomeren auf Natur- oder Kunstkautschuk verwendet.

Aus der BE-A-641 157 ist eine mit einer Klebeschicht überzogene Weich-PVC-Folie bekannt. Der Klebstoff soll mit Wasser aktivierbar sein, und zwischen diesem Klebstoff und der PVC-Folie ist eine Beschichtung aus einem Butadien-Akrylnitril-Kopolymer, einem Akrylatpolymer, einem Akrylatkopolymer, einem Polyvinylazetat, einem Epoxyharz oder eine Mischung eines synthetischen Elastomeren mit einem Phenolharz oder einem Polyester vorgesehen.

Durch die DE-B-1 026 023 ist ein Verfahren zum Aufkleben von Platten oder Bahnen aus Vinylpolymeren, -mischpolymeren oder Zellulosederivaten auf feste Unterlagen bekannt, bei dem die Platten mit einer wäßrigen Dispersion eines Gemisches von Butadien-Akrylnitril-Mischpolymerisat und einem freie Hydroxyl- oder Karboxylgruppen enthaltenden Kunstharz, Naturharz oder dessen Teilester vor Auftrag des Klebemittels überzogen und getrocknet werden.

Die Aufgabe der vorliegenden Erfindung besteht darin, eine Kunststoffolie auf der Basis von Hart- oder Halbhart-PVC mit einer geeigneten umweltfreundlichen Haftvermittlerbeschichtung zum Kaschieren von porösen Werkstoffen anzugeben, die eine ausreichend feste Verbindung zwischen Folie und Werkstoff gewährleistet.

Zur Lösung der Aufgabe ist vorgesehen, Hart- oder Halbhart-PVC zum Kaschieren von porösen Werkstoffen mit einem lösungsmittelfreien Dispersionshaftvermittler aus Ethylen-Vinylazetat-Kopolymeren oder Polyurethan zu versehen.

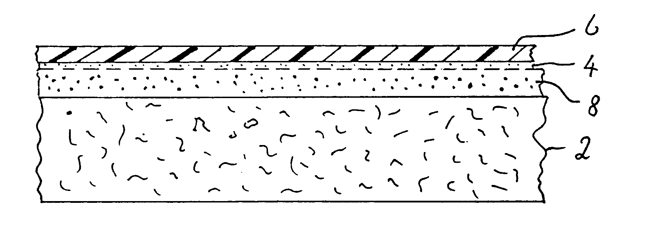

Versuche haben gezeigt, daß eine Beschichtung der Hart- oder Halbhart-PVC-Folie mit einem der Dispersionshaftvermittler ausreichend fest auf der Folie haftet und auch für eine ausreichend feste Verbindung zwischen der so erhaltenen Kaschierfolie (Hart- oder Halbhart-PVC-Folie mit Dispersionshaftvermittler) einerseits und dem zu kaschierenden Werkstoff andererseits über einen geeigneten, beispielsweise auf dem Werkstoff aufgebrachten Kleber, beispielsweise einen Dispersionskleber, sorgt. Reißversuche bei derart kaschierten Spanplatten haben gezeigt, daß praktisch eine dünne Oberflächenschicht der Spanplatte "abreißt" und die Klebeschicht selbst stabil bleibt. Ein Ausführungsbeispiel ist in der beigefügten Zeichnung im Schnitt dargestellt. Die Zeichnung zeigt schematisch eine spanplatte 2, die mit einer mit einem Dispersionshaftvermittler 4 beschichteten Hart-PVC-olie 6 kaschiert ist unter Verwendunge einer Klebemittelschicht 8.

## Patentansprüche

1. Kunststoffolie auf der Basis von Hart- oder Halbhart-PVC, die mit einem lösungsmittelfreien Dispersionshaftvermittler beschichtet ist, **dadurch gekennzeichnet,** daß die Hart- oder Halbhart-PVC-Folie zum Kaschieren von porösen Werkstoffen mit einem lösungsmittelfreien Dispersionshaftvermittler aus Ethylen-Vinylazetat-Kopolymeren oder Polyurethan versehen ist.

## Claims

1. A plastics foil on the basis of hard or semihard PVC which is coated with a solvent-free dispersion-based bonding agent, characterized in that for covering porous materials the hard or semihard PVC foil is provided with a solvent-free dispersion-based bonding agent of ethylene vinyl acetate copolymers or polyurethane.

## Revendications

1. Feuille de matière synthétique à base de PVC dur ou semi-dur qui est recouverte d'un agent adhésif à dispersion, caractérisée en ce que la feuille de PVC dur ou semi-dur, pour le doublage de matériaux poreux, est munie d'un agent adhésif à dispersion sans solvant en copolymère éthylène-acétate de vinyle ou en polyuréthanne.
